# EUROPÄISCHE PATENTSCHRIFT

(11) **EP 3 158 254 B1**
(45) Veröffentlichungstag und Bekanntmachung des Hinweises auf die Patenterteilung: **14.03.2018**
(21) Anmeldenummer: 15718880.6
(22) Anmeldetag: 28.04.2015
(51) Int. Cl.: F16L 57/06, F16L 11/12, F17D 5/06, G01M 3/40, G01M 5/00

(54) **SCHLAUCH MIT INTEGRIERTEM SYSTEM ZUR DETEKTION VON BESCHÄDIGUNGEN**
HOSE COMPRISING AN INTEGRATED SYSTEM FOR DETECTING DAMAGE
TUYAU INTÉGRANT UN SYSTÈME DE DÉTECTION DES ENDOMMAGEMENTS

(30) Priorität: 19.06.2014 DE 102014211798
(43) Veröffentlichungstag der Anmeldung: 26.04.2017
(73) Patentinhaber: Eddelbüttel + Schneider GmbH, 21079 Hamburg (DE)
(72) Erfinder: RECK, Siegfried, 31582 Nienburg (DE); WETZEL, Guido, 86633 Neuburg (DE)
(74) Vertreter: Finger, Karsten
(86) Internationale Anmeldenummer: PCT/EP2015/059114
(87) Internationale Veröffentlichungsnummer: WO 2015/193012

(56) Entgegenhaltungen:
- DE-A1-102012 112 450
- JP-A- 2007 132 371

## Beschreibung

Die Erfindung betrifft einen Schlauch mit integriertem System zur Detektion von Beschädigungen gemäß dem Oberbegriff des Anspruchs 1.

Zum Transport von Abraum wie z.B. Gestein, Sand und Schlamm aus Gewässern werden Schläuche verwendet, deren Durchmesser bis zu drei Metern betragen kann. Derartige Baggerschläuche können aus Segmenten zusammengesetzt werden, um ihre Länge dem Anwendungsfall anzupassen bzw. um bei Beschädigung nur einzelne Segmente austauschen zu müssen.

Beschädigungen der Schlauchwand von Innen kommen bei diesen Anwendungen häufig vor, weil der zu transportierende Abraum abrasiv ist. Hierdurch wird beim Betrieb die Innenseite der Schlauchwand abgenutzt und abgetragen, d.h. die Wandstärke wird reduziert, bis es schließlich zu Durchbrüchen der Schlauchwand und damit Verlust an Abraummaterial bzw. Transportleistungen kommen kann. Dabei hängt das Maß der Abnutzung sehr stark vom Abraummaterial und der Transportgeschwindigkeit ab, so dass sich die Abnutzung im Inneren des Baggerschlauches nicht vorhersagen lässt. Eine Beschädigung des Baggerschlauches führt jedoch zu einem Stillstand der Förderung, so dass drohende Beschädigungen rechtzeitig erkannt werden sollten.

Zu diesem Zweck können Sichtprüfungen der Innenseite der Schlauchwand durchgeführt werden. Dies erfolgt üblicherweise durch Personen, welche rein optisch die Schlauchwand von Innen inspizieren, weshalb zu diesem Zweck die Förderung unterbrochen und der Baggerschlauch geleert und an Land hingelegt werden muss. Dies führt zu einem großen Aufwand sowie zu einer Unterbrechung der Förderung und macht dieses Verfahren sehr zeit- und kostenaufwändig.

Zur Unterstützung der Inspektion durch Personen ist es bekannt, farbige Schichten in die Schlauchwand einzubringen, so dass bei der Inspektion der Innenseite der Schlauchwand der Abrieb an sich sowie das Maß des Abriebs optisch leichter durch die Färbung der freigelegten Schlauchschichten erkannt werden kann. Dies erleichtert zwar den Personen die Inspektion und steigert die Aussagemöglichkeiten für das Maß des Abriebs, ändert jedoch nichts am Aufwand und den Kosten der persönlichen Inspektion.

Die DE 690 13 336 T2 betrifft einen Verschleißanzeiger für Materialaustauschsysteme, wobei hier ein abrasiv wirkendes Plastik-Granulat transportiert wird. Der eigentliche Schlauch wird durch farbige Verschleißanzeiger sowie eine diese umgebende äußerste lichtdurchlässige Sicherheitsschicht ummantelt, so dass von außen durch die Sicherheitsschicht eine optische Inspektion des Verschleißes dahingehend erfolgen kann, ob die farbigen Verschleißanzeiger von außen noch als vorhanden oder bereits abgerieben erkannt werden können. Dieses System erfordert die Zugänglichkeit und optische Inspizierbarkeit des zu überwachenden Schlauches während des Betriebes von außen und von allen Seiten, weshalb es auf die zuvor beschriebenen Baggerschläuche nicht anwendbar ist, welche i.Allg. über den Großteil ihrer Länge im Wasser eingesetzt werden.

In der DE 10 2012 112 450.7 wird vorgeschlagen, in einem oder mehreren Querschnitten der Schlauchwand eines Baggerschlauches mehrere Transponder radial übereinanderliegend in verschiedene Tiefen der Schlauchwand einzubringen und ihre Anwesenheit mit Hilfe eines Lesegerätes von außen durch die Schlauchwand zu erfassen. Gehen durch den Abrieb während des Betriebes von innen her einzelne Transponder verloren, so kann deren Fehlen durch das Lesegerät von außen festgestellt und hierdurch auf die verbleibende Wandstärke an dieser Stelle geschlossen werden. Dieses Verfahren kann jedoch nur angewendet werden, wenn die Umgebung des Baggerschlauches trocken ist, weil die Verbindung zwischen den Transpondern und dem Lesegerät über hochfrequente elektromagnetische Felder erfolgt, die sich in Wasser nicht ausbreiten können.

Zur Überwachung eines Schlauches zum Transport von Erzen und dergleichen im Bergbau schlägt die US 2004/0065377 A1 vor, einen elektrisch leitfähigen Pfad in die Schlauchwand einzubringen und dessen elektrischen Eigenschaften zu überwachen und auszuwerten. Hierbei soll eine unzulässig hohe Reduzierung der Wandstärke des Schlauches durch eine Beschädigung des elektrisch leitfähigen Pfades erkannt werden. Dieses System stellt jedoch nur unzuverlässig Angaben über den Abrieb der Innenwand des Schlauches zur Verfügung, weil auch eine punktuelle bzw. kleinflächige Beschädigung der Innenwand zur einer derartigen Veränderung der elektrischen Eigenschaften des elektrisch leitfähigen Pfades führen kann, dass diese zu Unrecht als unzulässiger Abrieb interpretiert werden kann. Auch lässt sich die Position des kritischen Abriebs auf diese Weise nur sehr ungenau aus den veränderten elektrischen Eigenschaften bestimmen.

Ebenfalls zu diesem Zweck beschreibt die DE 699 32 950 T2 mehrere Verschleiß-Abfühlelemente, die jeweils in einer abgefühlten Schicht in unterschiedlichen Abständen von der Innenseite der Schlauchwand angeordnet sind. Die Verschleiß-Abfühlelemente geben Angaben über eine Ausbreitung des Schlauchverschleißes leitungsgebunden nach außen. Dieses System ist aufgrund seiner speziellen abgefühlten Schichten und Verschleiß-Abfühlelemente sowie deren Verkabelung durch die Schlauchwand hindurch sehr aufwendig und damit teuer.

Eine Aufgabe der vorliegenden Erfindung ist es, einen Schlauch mit integriertem System zur Detektion von Beschädigungen der eingangs beschriebenen Art bereit zu stellen, so dass die Stärke der Schlauchwand während des Betriebs von außen, insbesondere vom Ende des Schlauches bzw. Schlauchsegments, möglichst genau an konkreten Stellen möglichst einfach bestimmt werden kann.

Die Aufgabe wird erfindungsgemäß durch einen Schlauch mit integriertem System zur Detektion von Beschädigungen mit den Merkmalen gemäß Anspruch 1 gelöst. Vorteilhafte Weiterbildungen sind in den Unteransprüchen beschrieben.

Somit betrifft die vorliegende Erfindung einen Schlauch mit integriertem System zur Detektion von Beschädigungen mit einer Schlauchwand, in die wenigstens ein Transponder eingebettet ist. Derartige Schläuche sind z.B. aus der DE 10 2012 112 450.7 bekannt. Dort werden die Transponder jedoch durch den Abrieb von Innen aus der Schlauchwand abgetragen, ihr Fehlen festgestellt und hieraus die verbleibende Wandstärke in diskreten Abstufungen bestimmt.

Bei dem erfindungsgemäßen Schlauch ist jedoch in der Schlauchwand ferner eine Antenne eingebettet, so dass zwischen der Antenne und dem Transponder eine elektromagnetische Kopplung bestehen kann, wobei die Stärke und bzw. oder Qualität der elektromagnetischen Kopplung ein Maß für den Grad der Beschädigung der Schlauchwand ist.

Genauer gesagt hängt die Stärke und bzw. oder die Qualität der elektromagnetischen Kopplung von der Masse des Materials der Schlauchwand, insbesondere der Abnutzungsschicht, ab, welches zwischen der Antenne und dem Transponder von der elektromagnetischen Kopplung durchdrungen werden kann.

Der Erfindung liegt dabei der Gedanke zugrunde, dass die Signalstärke bzw. die Qualität (RSSI = Received Signal Strength Indicator (RSSI)) einer elektromagnetischen Kopplung wie z.B. einer Funkverbindungen zwischen Sender und Empfänger, hier eine Antenne und ein Transponder, von dem Medium abhängt, durch welches hindurch die Funkverbindung besteht. Ändert sich dieses Medium, so ändern sich auch die Signalstärke bzw. Qualität der Funkverbindung.

Im vorliegenden Fall bedeutet dies, dass bei einem Schlauch diese Funkverbindung durch seine Schlauchwand und bzw. oder durch sein medienführendes Inneres, welches im Betrieb mediengefüllt ist, hierdurch besteht. Dabei werden die Schlauchwand und das leere bzw. gefüllt Innere jeweils unterschiedliche (di-)elektrische Eigenschaften haben. Ferner wird bei einer Reduzierung der Stärke der Schlauchwand durch Abrieb durch das zu fördernde Medium im gleichen Maße das Innere des Schlauches vergrößert. Somit ändern sich hierdurch auch die Signalstärke bzw. die Qualität der Funkverbindung, die durch diese beiden Bereiche Schlauchwand und Schlauchinneres besteht. Wird diese Veränderung der Signalstärke bzw. der Qualität der Funkverbindung erfasst und relativ zu den vorherigen Werten bzw. einem Startwert z.B. eines unbeschädigten Schlauches ausgewertet, so kann im Betrieb des Schlauches von außen kontinuierlich erfasst werden. Auch sind konkrete Aussagen über das Maß der Abnutzung für den Bereich des Transponders bzw. den Bereich der Funkverbindung möglich.

Der Schlauch ist dabei vorzugsweise ein flexibler, elastischer Schlauch, der z.B. aus einem elastomeren Material wie z.B. Gummi besteht bzw. dieses aufweist. Der Schlauch ist vorzugsweise ausgebildet, um abrasive Materialien wie z.B. Gestein, Sand und Schlamm zu fördern, die Flüssigkeiten wie Wasser enthalten. Derartige Schläuche werden auch als Baggerschläuche zur Förderung derartiger Materialien aus Gewässern eingesetzt.

Gemäß einem Aspekt der vorliegenden Erfindung weist die Schlauchwand eine äußere Mindestschicht und eine innere Abnutzungsschicht auf, so dass bei einem Abtrag der Abnutzungsschicht die Stärke der Mindestschicht ausreichend ist, einen noch sicheren Betrieb des Schlauches zu gewährleisten.

Diese Schichten können aus unterschiedlichen oder identischen Materialien bestehen. Ihre Unterscheidung ist vielmehr der Mindest-Wandstärke geschuldet, die die Mindestschicht aufweisen muss, damit ein Betrieb des Schlauches immer noch sicher möglich ist. Die übrige innere Wandstärke, d.h. die Abnutzungsschicht, kann jedoch dem Abtrieb Preis gegeben werden, ohne dass hierdurch der Betrieb des Schlauches beendet werden muss.

Vorteilhaft ist hierbei, dass eben ein durch den Betrieb erfolgender und unvermeidbarer Abrieb in dem Maße der Abnutzungsschicht toleriert werden kann. Liegt somit der Abrieb, der durch die Signalstärke bzw. der Qualität der Funkverbindung zwischen Antenne und Transponder bestimmt wird, an dieser Stelle der Schlauchwand in dem Maße der Wandstärke, die als Abnutzungsschicht definiert ist, so kann der Schlauch weiterhin betrieben werden. Ansonsten ist der Betrieb zu unterbrechen.

Gemäß einem weiteren Aspekt der vorliegenden Erfindung ist der Transponder innerhalb der Abnutzungsschicht, vorzugsweise radial maximal vom Schlauchinneren beabstandet, angeordnet. Dies hast den Vorteil, dass auch bei diesem System der Transponder durch den fortschreitenden Abrieb aus der Schlauchwand entfernt, beschädigt oder zerstört werden kann, so dass sein Fehlen festgestellt und bei Kenntnis der Lage des Transponders, d.h. seiner radialen Position, auf einen entsprechend tiefen Abrieb an dieser Stelle der Schlauchwand geschlossen werden kann. Auch kann in diesem Fall ein Alarm ausgelöst werden. Hierzu ist es besonders vorteilhaft, wenn der Transponder radial maximal vom Schlauchinneren beabstandet angeordnet ist, weil dann die Unterbrechung der Funkverbindung erst bei maximal zulässigen Abrieb eintritt.

Gemäß einem weiteren Aspekt der vorliegenden Erfindung ist eine Mehrzahl von Transpondern in der Schlauchwand eingebettet, die in Umfangsrichtung und bzw. oder in Längsrichtung zueinander versetzt angeordnet sind. Durch den Versatz in Längsrichtung kann der Schlauch über seine Länge auf Beschädigungen überwacht werden. Der Versatz in Umfangsrichtung sorgt für eine verbesserte Überwachung über den Strömungsquerschnitt. Dies ist besonders vorteilhaft, weil sich je nach Anwendungsfall und Lage des Schlauches unterschiedlich stark beanspruchte Bereiche an der Innenseite der Schlauchwand ausbilden, deren Lage im Betrieb nur bedingt vorhergesehen werden kann. Daher kann durch die Erhöhung der Anzahl der Transponder innerhalb eines Querschnitts eine sicherere Aussage über den maximal in dieser Ebene auftretenden Abrieb getroffen werden.

Gemäß einem weiteren Aspekt der vorliegenden Erfindung sind wenigstens drei Transponder im Wesentlichen innerhalb einer Querschnittsfläche in Umfangsrichtung zueinander, vorzugsweise um maximal 120°, versetzt angeordnet. Auf diese Weise kann eine Querschnittsfläche bei überschaubarem Aufwand vergleichsweise gut überwacht und der maximale Abrieb mit hoher Wahrscheinlichkeit sicher erfasst werden. Dies ist insbesondere der Fall, falls die Transponder um maximal 120°, insbesondere drei Transponder im etwa 120°, zueinander versetzt angeordnet sind.

Gemäß einem weiteren Aspekt der vorliegenden Erfindung ist die Antenne radial außerhalb der Abnutzungsschicht, vorzugsweise innerhalb der Mindestschicht, angeordnet. Hierdurch kann begünstigt werden, dass die Antenne selbst nicht durch den Abrieb beschädigt wird. Vorzugsweise ist die Antenne in der Mindestschicht integriert, um sie vor äußeren Einflüssen zu schützen.

Gemäß einem weiteren Aspekt der vorliegenden Erfindung ist die Antenne derart ausgebildet und angeordnet, so dass die elektromagnetische Kopplung mit dem Transponder im Wesentlichen durch die Abnutzungsschicht bestehen kann. Hierdurch wird die Energie, die zum Betrieb der elektromagnetischen Kopplung, d.h. für die Funkverbindung, erforderlich ist, bestmöglich genutzt, d.h. der Energiebedarf für die Funkverbindung minimiert. Ferner werden nur die Bereiche des Schlauchmaterials elektromagnetisch durchdrungen, die zur Durchführung der Erfindung erforderlich sind. Hierdurch wird auch die Umgebung von der elektromagnetischen Strahlung weitestgehend freigehalten.

Gemäß einem weiteren Aspekt der vorliegenden Erfindung ist die Antenne im Wesentlichen innerhalb einer Querschnittsfläche zu zwei Transpondern in Umfangsrichtung jeweils um 60° versetzt angeordnet. Hierdurch wird eine Mindestdistanz der Strecke der Funkverbindung gewährleistet. Bei drei Transpondern wird gleichzeitig eine gleichmäßige Anordnung der Antenne zu den Transpondern erreicht.

Gemäß einem weiteren Aspekt der vorliegenden Erfindung weist die Antenne eine Antennenleitung auf, die in Längsrichtung gradlinig oder gewunden angeordnet. Eine gradlinige Anordnung, d.h. gerade entlang der Längsachse, minimiert die Länge der Antennenleitung und damit ihren Materialeinsatz und Kosten sowie den Energiebedarf zum Betrieb der Antenne. Eine gewundene oder auch wellige Anordnung, d.h. mit Komponenten des Verlaufs der Antennenleitung sowohl in Längsrichtung als auch quer dazu, d.h. schräg, ist vorteilhaft, weil hierdurch die Anordnung der Anschlüsse der Antennenleitung an den Schlauchenden flexibler angeordnet werden können.

Gemäß einem weiteren Aspekt der vorliegenden Erfindung kann der Transponder mittels der elektromagnetischen Kopplung eine ihn eindeutig identifizierende Kennung an die Antenne übertragen. Mittels dieser Kennung kann der Transponder eindeutig identifiziert werden. Ist seine Position auf dem Schlauch bekannt, dass die Signalstärke bzw. die Qualität seiner Funkverbindung und darüber der Abrieb an dieser Stelle seiner Position im Schlauch zugeordnet werden.

Ein Ausführungsbeispiel und weitere Vorteile der Erfindung werden nachstehend im Zusammenhang mit den folgenden Figuren erläutert. Darin zeigt:
- Fig. 1: eine schematische Darstellung eines Querschnitts durch einen erfindungsgemäßen Schlauch;
- Fig. 2: eine schematische Darstellung eines Längsschnitts durch einen erfindungsgemäßen Schlauch;
- Fig. 3: eine schematische Darstellung einer Draufsicht in Längsrichtung eines erfindungsgemäßen Schlauchs (oben) und ein schematisches elektrisches Schaltbild hierzu (unten); und
- Fig. 4: eine schematische Darstellung einer Draufsicht in Längsrichtung mehrerer verbundener erfindungsgemäßer Schläuche.

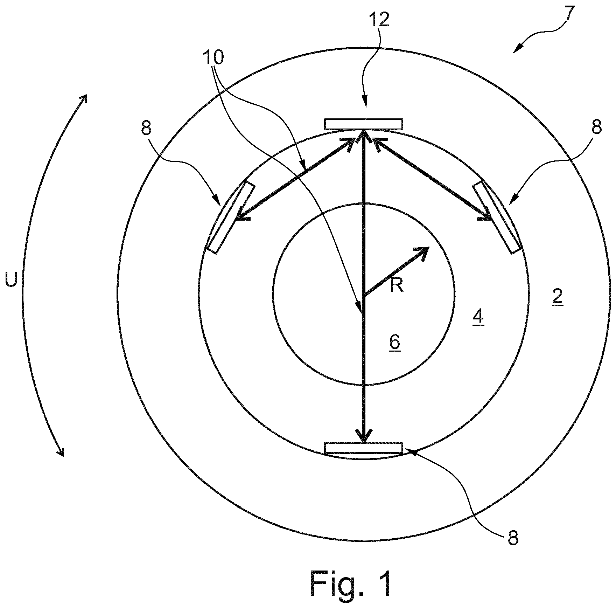

Fig. 1 zeigt eine schematische Darstellung eines Querschnitts durch einen erfindungsgemäßen Schlauch 7. Werden mehrere dieser Schläuche 7 miteinander kombiniert eingesetzt, so können die einzelnen Schläuche 7 auch als Schlauchsegmente 7 bezeichnet werden.

Der Schlauch 7 weist in radialer Richtung R eine äußere Mindestschicht 2 und eine innere Abnutzungsschicht 4 auf, die gemeinsam die Schlauchwand 2, 4 bilden. Diese Schlauchwand 2, 4 schließt das hohle Schlauchinnere 6 ein, welches der Förderung eines fluiden Medium dient. Beispielsweise kann der Schlauch 7 als Baggerschlauch 7 zur Förderung von flüssigkeitsenthaltenden Massen wie Schlamm, Sand, Gestein etc. eingesetzt werden.

Der Schlauch 7 weist drei Transponder 8 auf, die in der dargestellten Querschnittsfläche gleichmäßig verteilt um ca. 120° in Umfangsrichtung U versetzt zueinander angeordnet sind. Die Transponder 8 sind jeweils in der Schlauchwand 2, 4 eingebettet, und zwar innerhalb der Abnutzungsschicht 4 möglichst nah zu der Mindestschicht 2.

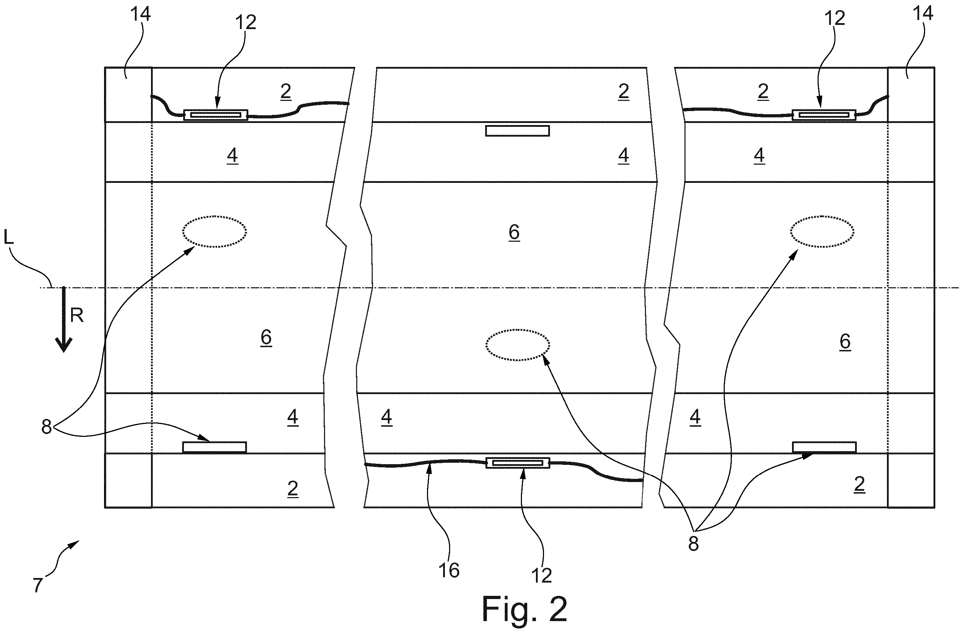

Der Schlauch 7 weist ferner eine Antenne 12 auf, welche in Längsrichtung L des Schlauches 7 (vgl. Fig. 2 bis 4) verläuft und in der dargestellten Querschnittsfläche um jeweils ca. 60° in Umfangsrichtung U zu zwei der Transponder 8 versetzt angeordnet ist. Die Antenne 12 ist innerhalb der Mindestschicht 2 und dort möglichst nah zur Abnutzungsschicht 4 angeordnet.

Mittels der Antenne 12 kann von außerhalb des Schlauches 7 jeweils eine elektromagnetische Kopplung 10 in Form einer Funkverbindung 10 zu den Transpondern 8 aufgebaut werden. Die Antenne 12 ist dabei derart ausgebildet und angeordnet, dass die Funkverbindung 10 möglichst weitestgehend durch die Abnutzungsschicht 4 sowie das Schlauchinnere 6 verläuft, durch das im Betrieb das zu fördernde fluide Medium fließt. Hierbei sendet jeder Transponder 8, der durch die Antenne 12 angesprochen wird, zum einen eine eindeutige Kennung, mittels er identifiziert werden kann. Über die Kenntnis der Anordnung der Transponder 8 im Verlauf des Schlauches 7 ist dann auch die Position des aktuell angesprochenen Transponders 8 bekannt.

Erfindungsgemäß erfolgt die Bestimmung des Maßes des Abtriebs der Abnutzungsschicht 4 über die Signalstärke bzw. die Qualität der Funkverbindung 10, d.h. über die gesendete Kennung des Transponders 8 oder über ein separates Signal, zwischen der Antenne 12 und den jeweiligen Transpondern 8 an dieser Stelle bzw. dem Bereich dazwischen. Dieses Maß kann z.B. über den RSSI-Wert bestimmt werden. Dabei wird der RSSI-Wert der jeweiligen Funkverbindung 10, d.h. für jeden Transponder 8, zu einem bestimmten Zeitpunkt festgestellt, z.B. bei einem neuen und unbeschädigten Schlauch 7 oder nach einer persönlichen Inspektion des Schlauches 7 von innen, so dass ein bekannter Zustand des Verschleißes bzw. des Abriebs bekannt ist. In diesem Zustand liegt der absolute bzw. relative maximale RSSI-Wert vor.

Aufgrund ihrer (di-)elektrischen Eigenschaften beeinflussen sowohl das Material der Schlauchwand 2, 4 als auch das zu fördernde fluide Medium die Ausbreitung der elektromagnetischen Felder der Funkverbindung 10. Wird nun im Betrieb des Schlauches 7 durch die Abrasion des fluiden Mediums die Wandstärke des Schlauches 7, d.h. der Abnutzungsschicht 4, reduziert, vergrößert sich im gleichen Maße die Querschnittsfläche des mediengefüllten Schlauchinneren 7. Da die Abnutzungsschicht 4 und das fluide Medium im Schlauchinneren 7 unterschiedliche (di-)elektrische Eigenschaften besitzen, verändern sich auch die Ausbreitungsbedingungen für das elektromagnetische Feld der Funkverbindung 10, so dass sich infolgedessen auch die RSSI-Werte der Transponder 8 ändern. Aus diesen Änderungen lässt sich erfindungsgemäß der Grad der Abnutzung der Schlauchwand 2, 4 ermitteln.

Fig. 2 zeigt eine schematische Darstellung eines Längsschnitts durch einen erfindungsgemäßen Schlauch 7. Die Anordnung der drei Transponder 8 mit Antenne 12 des Querschnitts der Fig. 1 findet sich in dieser Darstellung an drei Stellen, d.h. links, mittig und rechts, wieder, wobei diese jeweils gegeneinander um ca. 60° verdreht angeordnet sind. Die Antennen 12 sind über eine Antennenleitung 16 miteinander elektrisch leitfähig verbunden. Durch den Versatz der Transponder-Antenne-Anordnungen ergibt sich ein gewundener Verlauf der Antennenleitung 16 in Längsrichtung L. Die dazwischenliegenden Bereiche des Schlauches 7 sind zur Verbesserung der Darstellung der erfindungsrelevanten Elemente herausgeschnitten. An den beiden Enden weist der Schlauch 7 jeweils eine Schlauchsegmentkupplung 14 auf, um als Segment eines längeren Schlauches verwendet und mit anderen Segmenten zu diesem zusammengefügt werden zu können.

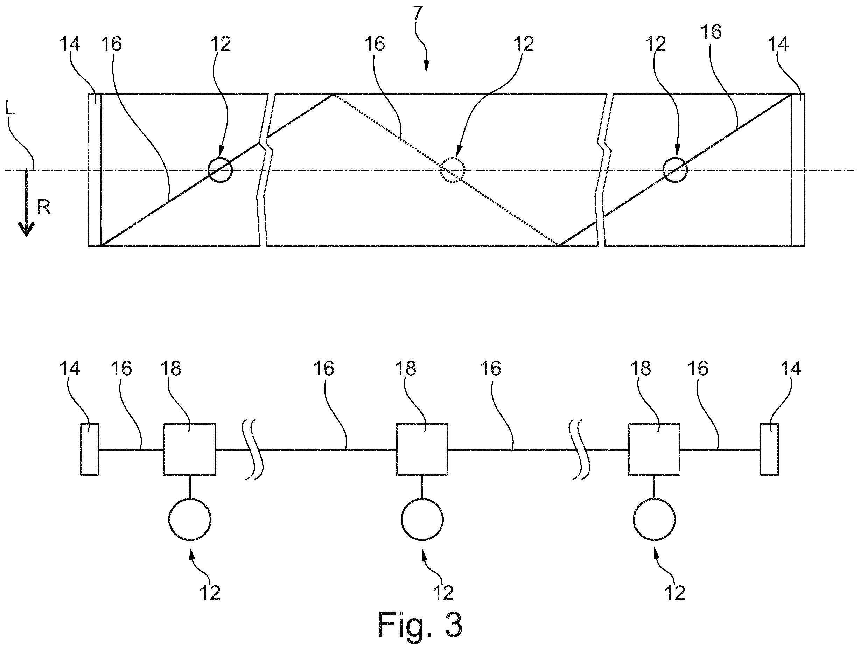

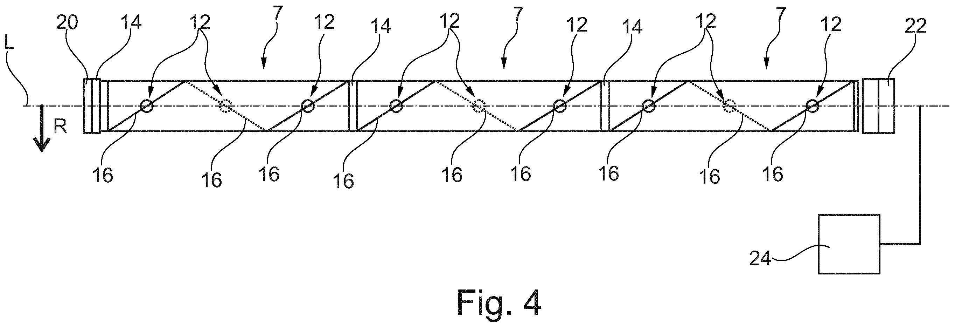

Fig. 3 zeigt eine schematische Darstellung einer Draufsicht in Längsrichtung L eines erfindungsgemäßen Schlauchs 7 (oben) und ein schematisches elektrisches Schaltbild hierzu (unten). Die obere Darstellung entspricht den Elementen der Fig. 2. Die untere Darstellung eines elektrischen Schaltbildes zeigt die beiden außenliegenden Schlauchsegmentkupplungen 14, die jeweils auch Anschlüsse zur Verbindung der jeweiligen Antennenleitung 16 mit der korrespondierenden Antenneleitung des nächsten Segments oder mit einem externen Auswertegerät 24 (vgl. Fig. 4) aufweisen. Innerhalb des Schlauches 7 sind die Antennen 12 jeweils über ein Anpassungsnetzwerk 18 an die gemeinsame verlustarme Antennenleitung 16 angeschlossen, die zu beiden Enden des Schlauchsegments 7 führt.

Fig. 4 zeigt eine schematische Darstellung einer Draufsicht in Längsrichtung L mehrerer verbundener erfindungsgemäßer Schläuche 7, d.h. eines Schlauches mit mehreren Schlauchsegmenten 7. Hier werden die Signale der Funkverbindungen 10 über die rechte Schlauchsegmentkupplung 14 mittels eines Lesegerätes 22 in das erste Schlauchsegment 7 eingekoppelt und über die Schlauchsegmentkupplungen 14 an alle nachfolgenden Schlauchsegmente 7 übertragen. Das Schlauchsegmentkupplung 14 des letzten Schlauchsegments 7 wird mit einer Abschlussimpedanz 20 versehen, die das Auftreten von Reflexionen am Ende der Leitung verhindert.

Das Lesegerät 22 am Anfang des Schlauchs kann über die geleitete Funkverbindung alle Transponder 8 ansprechen, ihre Daten auslesen und an das Auswertegerät 24 weiterleiten. Um Übertragungsfehler durch gleichzeitige Antworten der Transponder 8 zu verhindern, kann das Lesegerät 22 die Transponder 8, die bereits ausgelesen wurden, für eine definierte Zeitdauer wie einen Auslesezyklus "stumm" schalten.

Neben einer eindeutigen Identifikationsnummer kann jeder Transponder 8 zusätzliche Informationen in seinem Speicher ablegen, wie z. B. die Nummer des Segments 7, in dem er angeordnet ist. Diese kann während der Montage des Schlauchs 7 ermittelt und an den Transponder 8 übertragen werden.

### Bezugszeichenliste

### (Teil der Beschreibung)

- L: Längsrichtung
- R: radiale Richtung
- U: Umfangsrichtung

- 2: äußere Mindestschicht der Schlauchwand
- 4: innere Abnutzungsschicht der Schlauchwand
- 6: Schlauchinneres
- 7: Schlauch(-segment)
- 8: Transponder (Chip mit Antenne)
- 10: elektromagnetische Kopplung (HF/UHF)
- 12: (Mess-)Antenne
- 14: Schlauchsegmentkupplung
- 16: Antennenleitung
- 18: Anpassungsnetzwerk
- 20: Abschluss-Impedanz
- 22: Lesegerät (Sender/Empfänger)
- 24: Auswertegerät

## Patentansprüche

1. Schlauch (7) mit integriertem System (8, 12) zur Detektion von Beschädigungen, mit einer Schlauchwand (2, 4), in die wenigstens ein Transponder (8) eingebettet ist,
**dadurch gekennzeichnet, dass**
in der Schlauchwand (2, 4) ferner eine Antenne (12) eingebettet ist, so dass zwischen der Antenne (12) und dem Transponder (8) eine elektromagnetische Kopplung (10) bestehen kann,
wobei die Stärke und/oder Qualität der elektromagnetischen Kopplung (10) ein Maß für den Grad der Beschädigung der Schlauchwand (2, 4) ist.

2. Schlauch (7) nach Anspruch 1,
wobei die Schlauchwand (2, 4) eine äußere Mindestschicht (2) und eine innere Abnutzungsschicht (4) aufweist, so dass bei einem Abtrag der Abnutzungsschicht (4) die Stärke der Mindestschicht (2) ausreichend ist, einen noch sicheren Betrieb des Schlauches (7) zu gewährleisten.

3. Schlauch (7) nach Anspruch 2,
wobei der Transponder (8) innerhalb der Abnutzungsschicht (4), vorzugsweise radial maximal vom Schlauchinneren (6) beabstandet, angeordnet ist.

4. Schlauch (7) nach einem der vorherigen Ansprüche,
wobei eine Mehrzahl von Transpondern (8) in der Schlauchwand (2, 4) eingebettet ist, die in Umfangsrichtung (U) und/oder in Längsrichtung (L) zueinander versetzt angeordnet sind.

5. Schlauch (7) nach Anspruch 4,
wobei wenigstens drei Transponder (8) im Wesentlichen innerhalb einer Querschnittsfläche in Umfangsrichtung (U) zueinander, vorzugsweise um maximal 120°, versetzt angeordnet sind.

6. Schlauch (7) nach einem der Ansprüche 2 bis 5,
wobei die Antenne (12) radial außerhalb der Abnutzungsschicht (4), vorzugsweise innerhalb der Mindestschicht (2), angeordnet ist.

7. Schlauch (7) nach einem der vorherigen Ansprüche,
wobei die Antenne (12) derart ausgebildet und angeordnet ist, so dass die elektromagnetische Kopplung (10) mit dem Transponder (8) im Wesentlichen durch die Abnutzungsschicht (4) bestehen kann.

8. Schlauch (7) nach einem der Ansprüche 4 bis 7,
wobei die Antenne (12) im Wesentlichen innerhalb einer Querschnittsfläche zu zwei Transpondern (8) in Umfangsrichtung (U) jeweils um 60° versetzt angeordnet ist.

9. Schlauch (7) nach einem der vorherigen Ansprüche,
wobei die Antenne (12) eine Antennenleitung (16) aufweist, die in Längsrichtung (L) gradlinig oder gewunden angeordnet ist.

10. Schlauch (7) nach einem der vorherigen Ansprüche,
wobei der Transponder (8) mittels der elektromagnetischen Kopplung (10) eine ihn eindeutig identifizierende Kennung an die Antenne (12) übertragen kann.

## Claims

1. Hose (7) with an integrated system (8, 12) for detecting damage, having
a hose wall (2, 4) into which at least one transponder (8) is embedded,
**characterized in that**
in addition, an antenna (12) is embedded in the hose wall (2, 4) in such a way that there can be electromagnetic coupling (10) between the antenna (12) and the transponder (8),
wherein the strength and/or quality of the electromagnetic coupling (10) is a measure of the extent of damage to the hose wall (2, 4).

2. Hose (7) according to Claim 1,
wherein the hose wall (2, 4) has an outer minimum layer (2) and an inner wear layer (4) so that when the wear layer (4) is eroded the thickness of the minimum layer (2) is sufficient to ensure still reliable operation of the hose (7).

3. Hose (7) according to Claim 2,
wherein the transponder (8) is preferably arranged spaced apart to a maximum extent in the radial direction from the hose interior (6) within the wear layer (4).

4. Hose (7) according to one of the preceding claims, wherein a multiplicity of transponders (8) are embedded in the hose wall (2, 4) and are arranged offset with respect to one another in the circumferential direction (U) and/or in the longitudinal direction (L).

5. Hose (7) according to Claim 4,
wherein at least three transponders (8) are arranged offset with respect to one another, preferably by a maximum of 120°, in the circumferential direction (U) essentially within the cross-sectional area.

6. Hose (7) according to one of Claims 2 to 5,
wherein the antenna (12) is arranged radially outside the wear layer (4), preferably within the minimum layer (2).

7. Hose (7) according to one of the preceding claims,
wherein the antenna (12) is embodied and arranged in such a way that the electromagnetic coupling (10) to the transponder (8) can be composed essentially of the wear layer (4).

8. Hose (7) according to one of Claims 4 to 7,
wherein the antenna (12) is arranged offset in each case by 60° in the circumferential direction (U) with respect to two transponders (8), essentially within a cross-sectional area.

9. Hose (7) according to one of the preceding claims,
wherein the antenna (12) has an antenna line (16) which is arranged linearly or wound in the longitudinal direction (L).

10. Hose (7) according to one of the preceding claims,
wherein the transponder (8) can transmit an identifier, which identifies it unambiguously, to the antenna (12) by means of the electromagnetic coupling (10).

## Revendications

1. Tuyau (7) muni d'un système intégré (8, 12) de détection des dommages, comprenant une paroi de tuyau (2, 4) dans laquelle est enrobé au moins un transpondeur (8),
**caractérisé en ce que**
une antenne (12) est en outre enrobée dans la paroi de tuyau (2, 4), de sorte qu'un couplage électromagnétique (10) peut être établi entre l'antenne (12) et le transpondeur (8),
l'intensité et/ou la qualité du couplage électromagnétique (10) étant une mesure du degré d'endommagement de la paroi de tuyau (2, 4).

2. Tuyau (7) selon la revendication 1,
la paroi de tuyau (2, 4) possédant une couche minimale (2) extérieure et une couche d'usure (4) intérieure, de sorte que dans le cas d'un enlèvement de la couche d'usure (4), l'épaisseur de la couche minimale (2) est suffisante pour garantir encore un fonctionnement en toute sécurité du tuyau (7).

3. Tuyau (7) selon la revendication 2, le transpondeur (8) étant disposé à l'intérieur de la couche d'usure (4), de préférence avec un espacement radial maximal de l'intérieur du tuyau (6).

4. Tuyau (7) selon l'une des revendications précédentes, une pluralité de transpondeurs (8) étant enrobés dans la paroi de tuyau (2, 4), lesquels sont disposés décalés les uns par rapport aux autres dans le sens circonférentiel (U) et/ou dans le sens longitudinal (L).

5. Tuyau (7) selon la revendication 4, au moins trois transpondeurs (8) étant disposés décalés les uns par rapport aux autres dans le sens circonférentiel (U) sensiblement à l'intérieur d'une surface de section transversale, de préférence d'un maximum de 120°.

6. Tuyau (7) selon l'une des revendications 2 à 5, l'antenne (12) étant disposée à l'extérieur de la couche d'usure (4) dans le sens radial, de préférence à l'intérieur de la couche minimale (2).

7. Tuyau (7) selon l'une des revendications précédentes, l'antenne (12) étant configurée et disposée de telle sorte que le couplage électromagnétique (10) avec le transpondeur (8) peut être établi sensiblement au travers de la couche d'usure (4).

8. Tuyau (7) selon l'une des revendications 4 à 7, l'antenne (12) étant disposée sensiblement à l'intérieur d'une surface de section transversale, respectivement décalée de 60° par rapport à deux transpondeurs (8) dans le sens circonférentiel (U).

9. Tuyau (7) selon l'une des revendications précédentes, l'antenne (12) possédant une ligne d'antenne (16) qui est disposée de manière rectiligne ou sinueuse dans le sens longitudinal (L).

10. Tuyau (7) selon l'une des revendications précédentes, le transpondeur (8) pouvant transmettre à l'antenne (12), par le biais du couplage électromagnétique (10), un identificateur qui l'identifie de manière univoque.
